# EUROPEAN PATENT APPLICATION

(11) **EP 4 811 205 A1**
(43) Date of publication of application: **23.09.2026**
(21) Application number: 26165430.5
(22) Date of filing: 17.03.2026
(51) Int. Cl.: G06F 40/117, G06F 40/137, G06F 40/151, G06F 16/84

(54) **TRANSFORMATION OF AN UNSTRUCTURED DOCUMENT TO A STRUCTURED DOCUMENT**

(30) Priority: 17.03.2025 US 202563773207 P
(71) Applicant: Vertesia, Inc., Brooklyn, NY 11249 (US)
(72) Inventor: BARROCA, Eric, Tokyo, 150-0022 (JP)
(74) Representative: Fish & Richardson P.C.

(57) **Abstract**

Methods, systems, and apparatus, including computer programs encoded on a computer storage medium, for transforming an unstructured document into a structured document. In methods, a visual representation of a page of a flat document and raw text data of the page are extracted. A first model input including the visual representation of the page, the raw text, and a first prompt is created. The first model input to at least a first model, from which structural data of the page is obtained. Based on the structural data, a second model input is generated and submitted to a second model, and thereby causes the second model to generate a response specifying attributes of a specific type of content in the page. A hierarchically structured page is created based on the structural data, raw text, and attributes.

## Description

### BACKGROUND

This specification relates to processing data, and more specifically transforming unstructured content, such as an electronic document having a Portable Document Format ("PDF"), to Extensible Markup Language ("XML").

Portable Document Format ("PDF") is a format used to present documents, which can include text and images in a way that's consistent across different devices and operating systems. A PDF can be thought of as a digital snapshot of a document that doesn't change whether you open it on a phone, laptop, tablet, or another client device. While a PDF has a semantic structure that visually conveys the semantic relationship between elements of the PDF to a viewer, that structure is not attached to the elements of the PDF, such that the content of a pdf lacks structural data expressing the semantic relationship between the extracted elements.

### SUMMARY

This specification describes a system implemented as computer programs on one or more computers in one or more locations that can transform unstructured content, such as an electronic document having a PDF, format into structured XML. Note that a PDF, which is an example of a "flat document," is used to illustrate the transformation, but the techniques discussed herein are equally applicable to any flat document. As used throughout this document, the phrase "flat document" refers to a document that lacks embedded data (e.g., metadata or tags) defining one or more relationships, hierarchy, or meaning of the content contained by the document. A document is not required to be devoid of all embedded data to be considered a "flat document." As noted above, a PDF is one type of flat document period other types of flat documents can include plain text (.TXT) files that do not include formatting or structural tags, and scanned images of documents such as .JPG, .PNG, and .TIFF files, which do not include semantic markup.

In general, one innovative aspect of the subject matter described in this specification can be embodied in methods that include the actions of extracting, by a system including circuity, a visual representation of a page of a flat document, raw text data from the flat document, wherein the raw text data includes position data of raw text included in the flat document; creating, by the system, a first model input including the visual representation of the page, the raw text, and a first prompt, wherein the first prompt includes instructions that cause at least a first model to analyze the visual representation and raw text of the page and determine types of content elements included in the page; submitting, by the system, the first model input to at least the first model; obtaining, by the system, a first analysis response to the first model input specifying structural data of the page, wherein the structural data includes block identifiers corresponding to locations of content in the page and data specifying (i) whether the page includes a first type of content element and (ii) whether the page includes a second type of content element; determining, based on the first analysis response, that the page includes the first type of content element; in response to the determination that the page includes the first type of content element: generating, by the system, a second model input including at least one of the visual representation or the raw text data, and a second prompt including instructions that cause performance, by at least a second model, of content-specific processing of the first type of content element; submitting, by the system, the second input to at least the second model; obtaining, by the system, a second analysis response to the second input specifying attributes of the first type of content element generated by at least the second model based on the second model input; and creating, by the system, a hierarchically structured page based on the first response, the second response, the raw text extracted from the page, and the first type of content element included in the page, wherein creating the hierarchically structured page includes: generating a first start tag that includes a block identifier corresponding to a portion of the raw text; inserting the portion of raw text between the first start tag and a corresponding first end tag; generating a second start tag that includes a block identifier corresponding to the first type of content element; and inserting the attributes from the second response between the second start tag and a corresponding second end tag. Other aspects can include corresponding systems configured to perform operations of the methods and non-transitory computer readable storing instructions that cause performance of operations of the methods.

These and other embodiments can each optionally include one or more of the following features. Methods can include the actions of combining multiple hierarchically structured pages of the flat document into a hierarchically structured document; receiving, by the system, a query related to the flat document; and processing, by the system, the query using the hierarchically structured document.

Methods can include the action of dynamically applying additional processing to content of the page based on the first analysis response. The second type of content element can be an image; and dynamically applying additional processing to the content of the page based on the first response can include applying image processing to the image based on the structure data indicating that the page includes the image.

Dynamically applying additional processing to the content of the page based on the first response can include determining, by the system, that the page includes two or more different types of content based on the first response; and applying, by the system, two or more different types of content-specific processing to content of the page based on the determination that the page includes the two or more different types of content.

Applying the two or more different types of content-specific processing to the content of the page can include applying two or more of table detection and extraction with column and row preservation, image identification and description, or optical recognition of text embedded in image.

Methods can include the operations of determining, after submitting the second input to the second model and before obtaining the second response, that an error condition exists; and resubmitting the second input to the second model or a different model in response to determining that the error condition exists.

The subject matter described herein can provide one or more of the following advantages. The conversion can reduce memory overhead by eliminating (or reducing) redundancy and enabling structure-aware compression, improving system performance in a way that generic computers cannot achieve without this specific process. For example, a flat document may repeat information to represent relationships. For example, in a list of employees with department data, each row might redundantly include the same information. This repetition increases storage size if each instance of the same data is stored, which is the case when storing a flat document. In contrast, in a hierarchically structured document (e.g., XML or a tree-based model), relationships can be encoded once, such that a parent node can group all child nodes without repeating the same relationship for each entry. This deduplication reduces the total data footprint. When duplicate data is not stored multiple times, this results in fewer bytes being needed to represent the data, which reduces memory usage. Similarly, when processing the structured document, less processing resources are required because less data is being processed.

The solutions discussed herein improve the technology of data processing and computer functionality because the document conversion addresses, for example, a technical problem in data management. For example, converting/transforming a flat document (e.g., a linear text file or unstructured data) into a hierarchically structured document (e.g., XML or a tree-based format) solves a problem inherent to computer-based data processing, namely that of efficiently storing, retrieving, and manipulating complex data relationships. More specifically, flat documents lack inherent structure, making them computationally inefficient for tasks like querying, indexing, or rendering relational content. By converting a flat document to a hierarchically structured document, the conversion enables faster processing, reduces memory overhead, and enhances interoperability across systems.

Furthermore, the transformation process doesn't just reorganize information for human convenience or consumption. Rather, the conversion enhances how a computer interprets and utilizes the data, resulting in faster query times, reduced resources consumption, and system interoperability. For example, hierarchically structured documents can enable data to be searched in less time than flat documents, In some situations, the search can of the hierarchically structured document can be carried out in O(log n) time versus O(n) time required to search a flat document. Similarly, the hierarchically structured document can be compressed or indexed more effectively relative to a flat document, thereby lowering CPU and memory demands. Also, the hierarchical document that is output enable the document to be used with systems (e.g., APIs, parsers) that rely on structured formats, improving machine-to-machine communication.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a system diagram of an example document transformation system that is interconnected between a client device and one or more external models.
FIG. 2 is a swim lane diagram illustrating operations performed to convert a flat (unstructured) document into a structured document.
FIG. 3 is a flow chart of an example process for converting an unstructured document (e.g., flat document) to a structured document (e.g., an XML document).
FIG. 4 illustrates an example of a computing device and a mobile computing device that can be used to implement the techniques described here.

Like reference numbers and designations in the various drawings indicate like elements.

### DETAILED DESCRIPTION

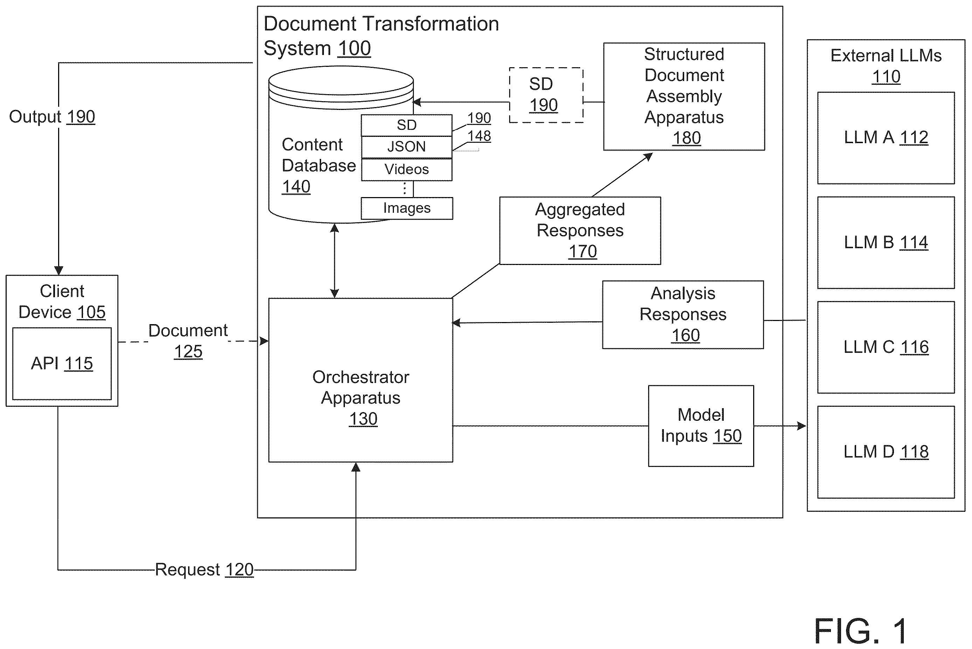

FIG. 1 shows an example document transformation system 100. The document transformation system 100 is an example of a computer implemented system. The document transformation system 100 can be implemented as computer programs on one or more computers in one or more locations in which the systems, components, and techniques described throughout this specification are implemented.

The document transformation system 100 can be connected between a client device 105 and one or more external models, such as large language models (LLMs) 110. In particular, the system 100 can receive a client request 120 from the client device 105, can determine an execution strategy for the client request 120, and can provide for the configuration of an input 150 to at least one of the one or more LLMs 110 based on the execution strategy for the client request 120, e.g., using at least one of the one or more external LLMs 110.

Each LLM in the external LLMs 110, e.g., LLM A 112, LLM B 114, LLM C 116, and LLM D 118, can have a recurrent neural network architecture that is configured to sequentially process the contents of an input, e.g., a prompt, and trained to perform next element prediction, e.g., to define a likelihood score distribution over a set of next elements. More specifically, each LLM 110 can be a transformer-based, e.g., an encoder-decoder transformer, an encoder-only transformer, or a decoder-only transformer, model that is configured to perform parallel processing of the contents of multimodal input using a multi-headed attention mechanism. In particular, each LLM 110 can be configured to process a sequence of input tokens and to predict a sequence of output tokens using a likelihood score distribution over a set of next elements based on the previously predicted output tokens.

In particular, the external LLMs 110 can be implemented with the same neural network architecture or with different neural network architectures. For example, LLM A 112 and LLM B 114 can be implemented with a first architecture, e.g., a Generative Pretrained Transformer (GPT) architecture, LLM C 116 can be implemented with a second architecture, e.g., a Text-to-Text Transfer Transformer (T5) architecture, and LLM D 118 can be implemented with a third architecture, e.g., a Bidirectional Encoder Representations from Transformer (BERT). As another example, a subset of the LLMs in the external LLMs 110 can have been finetuned from a foundational model for particular tasks in a mixture-of-experts model.

In some cases, one or more of the external LLMs 110 are multi-modal LLMs, e.g., that are configured to process one or more of a text modality, an image modality, an audio modality, or a video modality. For example, the external LLMs 110 can include a vision transformer, a contrastive language-image pretraining (CLIP) model, or a DALL-E model.

More specifically, the system 100 can configure a model input 150 to one or more of the external LLMs 110 using the client request 120 and/or other information. In particular, the system 100 can determine an execution strategy to execute the client request 120 using the external LLMs 110. More specifically, the system 100 can determine one or more prompts 154 based on the client request 120, provide for the design of response templates as example output formatting for the LLMs 110, and extract relevant data from any document 125 provided with the client request 120. The system 100 can then route the model input 150 to one or more of the external LLMs.

For example, the system 100 can receive a client request 120 and a document 125 from the client device 105, e.g., by way of an applied programming interface (API) 115, for processing. For example, the API 115 can enable a user, e.g., the user of the client device 105, to input requests and a document to the system 100 as context 125 for the client request 120. As an example, the API 115 can be provided to the user over a network, e.g., the Internet.

In the case that the system receives a document 125, the document 125 can be, e.g., a text, a book, a legal document, a webpage, etc. As another example, the document 125 can be an image input, an audio input, or a video input. The client request 120 can include a directed instruction that relates to the document 125. As an example, the client request 120 can include a direction to identify "What are the themes of this document?" or one or more analysis questions related to the document 125. In some implementations, the client request 120 can be a request to modify the document 125.

In some implementations, the document 125 can be a flat document, such as a PDF document. As noted above, the phrase "flat document" refers to a document 125 that lacks embedded data (e.g., metadata or tags) defining one or more relationships, hierarchy, or meaning of the content contained by the document 125. When a flat document is input to the system 100, the system 100 is lacking structural and semantic information about the document due to the lack of embedded data, which limits the analysis capabilities of models used to evaluate the document flat. Furthermore, even if traditional extraction tools are used to extract content from the document 125, those tools focus on either visual representation or raw text extraction, resulting in the loss of semantic structure. As such, these traditional extraction tools cannot provide the semantic structural information needed by the system 100 and/or the LLMs 110 to generate an adequate response to the client request 120.

For example, in the context of conventional PDF processing solutions either: 1) extract plain text with minimal structure, losing the relationships between elements, 2) require manual tagging and extraction rules, or 3) use AI to completely rewrite/regenerate the content, which can introduce inaccuracies, hallucinations, or alter the original text. The challenge is to transform flat documents, such as PDFs, into structured, machine-readable formats while preserving the exact original text and understanding the semantic relationships between different content elements.

As discussed in more detail below, the system 100 is configured (e.g., programmed) to transform a flat document into a semantically structured document that provides the semantic structural information that can be used by models, such as the LLMs 110, to analyze the content of the flat document in the same manner that would be possible when analyzing other documents that natively include the structural information. Moreover, the system 100 is configured in such a manner that during the transformation, the system 100 only uses the semantic structural information identified by the LLMs, and requires that the text of the resulting structured document must match the text of the original document, which prevents any hallucination because the LLMs are not being relied upon to generate any of the textual content of the resulting structured document.

To facilitate the transformation of the document 125, e.g., an unstructured document, into a structured document, the system 100 can step through a series of content analysis tasks, some of which can be carried out by the external LLMs 110, and use the outcomes of the analysis, including analysis responses 180 from the LLMs 110, to build the structured document 156 ("SD"). As discussed in more detail below, the series of content analysis tasks can include one or more of a conversion of the flat document into a JavaScript Object Notation ("JSON") representation, or another appropriate notation schema, a document layout analysis, and one or more content-type specific analyses. The content-type specific analyses can be dynamically (e.g., optionally) performed based on the outcome of the document layout analysis. For example, the results of the document layout analysis can include data specifying whether the document includes one or more different types of content. Using this information, the system 100 can be programmed to carry out, or not carry out, each of the content-type specific analyses based on whether or not the flat document includes each specific type of content.

For example, as discussed in more detail below, the results of the document layout analysis can indicate whether the document includes images (or images of a specified relevance) and/or whether the document includes tables. When the results indicate that the document includes an image (or an image of a specified relevance), the system 100 can initiate performance an image analysis operation, and when the results indicate that the document does not include an image (or an image of a specified relevance), the system 100 can refrain from initiating performance of the image analysis operation.

Similarly, when the results indicate that the document includes a data table (e.g., chart or spreadsheet), the system 100 can initiate performance a data table analysis operation, and when the results indicate that the document does not include a data table, the system 100 can refrain from initiating performance of the image analysis operation. In this way, the system 100 can refrain from performing all available analysis each time, and rather only invoking performance of content-type specific analysis when an results of a prior analysis operation indicates that the specific type of content that is the target of the content-type specific analysis (e.g., target content) is present in the document. In this way, the system 100 saves processing and computing resources. This also reduces the latency associated with performing the content-specific analysis when the document does not include the target content of the analysis.

A document can include one or more pages, and the techniques discussed herein can be performed on single-page documents as well as multi-page documents. As such, the reference to a document can be interpreted as being a reference to a single page of content. In the context of a multi-page document, each page can be individually analyzed, or two or more pages can be analyzed together.

The system 100 includes an orchestrator apparatus 130 that manages execution of the operations required to perform the document transformation. When the orchestrator apparatus 130 receives a client request 120 that includes a document 125 or references a stored document (e.g., in the content database 140), the orchestrator apparatus 130 can initiate the transformation of the document 125. In some implementations, the orchestrator apparatus 130 can initiate a page count operation. The page count operation can count the number of pages in the document, for example, by identifying a number of page breaks in the document 125, and return the number of pages to the orchestrator apparatus 130. In some implementations, the count operation can be performed by circuitry of the system 100. In other implementations, the count operation can be performed by one of the LLMs 110. In either case, the orchestrator apparatus 130 can generate instructions that cause performance of the count operation. In situations where the count operation is performed by one of the LLMs 110, the orchestrator apparatus 130 can generate a model input 150 that instructs one of the LLMs 110, and thereby causes one of the LLMs 110, to count how many pages are included in the document 125. An example instruction can be as simple as "Count how many pages are included in the document 125, and return a number specifying the number of pages in the document 125." The model input 150 can also include the document 125, or the document 125 can be otherwise be made accessible to the LLM that performs the count operation. In this example, the LLM that performs the count operation will return an analysis response 160 that includes the number of pages in the document 125.

The orchestrator apparatus 130 can also initiate conversion of the document 125 (e.g., a pdf or another flat document) to a JSON representation 148 (or another suitable notation format). In some implementations, the conversion of the document 125 can be a block-based conversion. That is, the conversion can break the document 125 into discrete blocks or segments and provide information about each block. For example, the conversion can specify, for each block of content, coordinates of a bounding box that surrounds the block of content, text included in the block of content, a block identifier that uniquely differentiates the block of content from other blocks of content, a type of content (e.g., image, text, or vector) included in the block of content, and a group identifier for the block of content. The same group identifier can be assigned to multiple blocks that are related. Blocks can be related, for example, by being proximate to each other, on a same row as each other, or containing similar content.

The steps of the conversion process can include a document analysis step, a block extraction step, and a JSON creation step. In the document analysis step, the document is parsed and the text of the document is extracted, for example, using optical character recognition. In the block extraction step, the document can be segmented into blocks based on locations of the text and/or other attributes of the text. The groups can also be assigned to the blocks based on their proximity to each other and/or the similarity of content in the blocks. In the JSON creation step, the block information, corresponding text for each block, as well as the content type can be serialized into a single JSON structure 148. Once the JSON structure 148 has been created, the orchestrator apparatus 130 can store the JSON structure 148 in the content database 140.

Additionally, the orchestrator apparatus 130 can generate an image of the document 125 (e.g., JPEG or another image format), and store the image in the content database 140. In some implementations, the JSON structure 148 and the image can be stored together as a content pair. In some implementations, the image and JSON structure 148 for the same document can be stored with reference to index references indicating that the JSON structure 148 and the image were both derived from the same document. In situations where the document includes multiple pages, the JSON structure and corresponding image for each page can be stored as a separate content pair, thereby facilitating analysis of the multi-page document on a page-by-page basis.

Once the JSON structure (also referred to as a JSON representation) and the image of the document 125 (e.g., a page of the document) have been stored, additional processing can be performed using content pairs (e.g., an image of the document 125 and a corresponding JSON representation). In some implementations, the orchestrator apparatus 130 initiates a page layout analysis by creating a model input 150 (e.g., a set of instructions) that causes the page layout analysis to be performed by at least one of the LLMs 110. For purposes of the following discussion, it is assumed that the LLM 112 is performing the page layout analysis, but others of the LLMs 110 could be performing the analysis.

The orchestrator apparatus 130 can create the model input 150, for example, by aggregating the image (e.g., a visual representation) of the document 125 and the JSON representation created using the document (and stored in association with the image) into the model input. The JSON representation included in the model input 150 can include, for example, raw text of the document and the block information previously discussed.

The orchestrator apparatus 130 can also include, in the model input 150, a prompt (or other instructions) that cause the LLMs 112 to analyze the document to determine characteristics of the document 125. In some implementations, the prompt instructs the LLMs 112 to identify distinct zones of content, such as text blocks, tables, and images. The prompt can also instruct the LLM 112 to classify elements of the document by their function, such as heading, paragraph, list. The prompt can also instruct the LLM 112 to do one or more of the following: preserve spatial relationships and hierarchical structure, extract tabular data with proper alignment, and/or provide descriptions of visual elements. An example prompt that instructs the LLM 112 in this way is as follows:
You are a PDF document layout analysis expert specializing in structured data extraction. Your task is to analyze a single page of a PDF document and convert its visual structure into a well-organized XML representation.
You excel at:
   1. Identifying distinct content zones (text blocks, tables, images.
   2. Classifying elements by their function (headings, paragraphs, lists)
   3. Preserving spatial relationships and hierarchical structure
   4. Extracting tabular data with proper alignment
   5. Providing concise descriptions of visual elements
Analysis tips:
   - Group related blocks by their group (g) values
   - Use bounding box (bb) coordinates to understand spatial positioning
   - Consider reading order (top-to-bottom, left-to-right)
   - Identify semantic relationships between adjacent blocks
Analyze the following document page and provide a structured JSON representation:
   ## Output Format:
Return a valid, parseable JSON object with these required fields:
   1. 'best_processed_as': "text" or "visual" - Choose "visual" for image-heavy content like charts, diagrams, or slides
   2. 'language': ISO 639-1 code (e.g., "en", "fr", "de")
   3. 'needs_ocr': true if page has low text-to-image ratio, text embedded in images, or appears scanned
   4. 'has_meaningful_images' : true if informative images are present (not just decorative elements)
   5. 'has_data_table': true if data tables exist
   6. 'number_of_tables': integer count of data tables 7. 'headings': array of objects with heading_level (1-6), block_ids array, and heading_title
   8. 'paragraph_starts': array of objects with block_id and type ("paragraph" or "list")
   9. 'dubious_ocr': true if OCR quality appears questionable
   10. 'complexity_level': "low", "medium", or "high" based on extraction complexity.

In this example, the prompt provides the skills that the LLM will use to perform the analysis by informing the LLM the skills that it has, provides guidance for how to perform the analysis by way of the analysis tips, and provides the format required for the output. With respect to the output, the prompt, which is included in a model input 150, specifies that the output should include data specifying whether the document 125 is best processed by additional models as a text document or visual document (e.g., image), and that visual should be specified when the analysis reveals that the document 125 includes image-heavy content like charts, diagrams, or slides. The prompt also causes the LLM 112 to determine the language of the document and output the language of the document 125 using ISO 639-1 codes. The prompt also causes the LLM 112 to analyze the document 125 to determine whether the document 125 requires OCR to be performed, and instructs the LLM 112 to make the determination based on whether the document 125 has a low text-to-image ratio (e.g., less than a specified threshold), if there is text embedded in images of the document 125, or if the document 125 has visual (or other) attributes that are indicative of a scanned document.

Some attributes that can be indicative of a scanned document include the inclusion of image artifacts and noise or graininess. For example, scanned documents may include speckling or pixelation, especially in scans done at lower resolutions. A scanned document may also include compression artifacts. For example, JPEG compression might introduce blocky patterns or blurring around text and edges. Another attribute of a scanned document can be skewed or misaligned content. For example, text or lines of the document may appear slightly tilted if the document wasn't correctly aligned on the scanner. A scanned document may also include text errors due to prior OCR operations (e.g., the letter "1" being identified as the number "1"), or inconsistent fonts due to recognition issues. These are some examples of attributes that can be used to determine if the document is a scanned document.

The prompt also causes the analysis response 160 generated by the LLM 112 to include response data specifying a value representing "true" or "false" as to whether the document 125 includes meaningful images, as opposed to images that are merely decorative. Is some situations, an image that is informative rather than merely decorative conveys specific information, enhances understanding of content of the document 125, or served a functional purpose beyond aesthetic appeal. The LLM 112 can use various image characteristics to determine whether each image of the document is (e.g., is classified as) informative or merely decorative. For example, the LLM 112 can determine that an image is informative because it directly relates to the accompanying text or topic, providing clarity or additional detail (e.g., a chart showing data trends next to a report). In contrast, the LLM 112, can determine that an image is decorative when the image loosely related (e.g., lower than a threshold level of relevance) or appears to be included for visual interest (e.g., a generic stock photo of a sunset).

Other attributes of images in the document 125 can also be considered to determine whether they are informative or merely decorative include the specificity of the image, the educational or explanatory value of the image, and necessity of the image to conveying the information contained in the document. For example, with respect to the specificity of an image, an informational image may contain precise details related to conveying specific information, such as labeled parts in a diagram, data points in a graph, or a map with marked locations. Meanwhile, decorative images may lack specific actionable content. With respect to the educational or explanatory value of an image, an informative image may explain a particular concept in the document 125, such as a cross-section of a cell in a biology textbook or a timeline of historical events. Meanwhile, a decorative image may be more artistic in nature, such as a floral border. With respect to the necessity of images, the LLM 112 can determine whether removal of the image would reduce comprehension of the associated content of the document 125. For example, omitting a graph from a scientific paper weakens support for the scientific reasoning provided in the paper, such that the graph may be considered an informational image. Meanwhile, removing whereas removing a background pattern of the document 125 likely has little impact on understanding the content of the document 125.

The prompt also causes the LLM 112 to include, in the analysis response 160, response data specifying a value representing "true" or "false" as to whether the document 125 includes data tables. The LLM 112 can determine whether the document 125 includes characteristics indicative of a data table to generate the corresponding response data. For example, the LLM 112 can examine the document for text patterns, such as repeated text (e.g., "Column 1, Column 2" or "Row A, Row B") that are indicative of headers or labels of a data table). The LLM 112 can also evaluate the document 125 to determine whether delimiters (e.g., commas) or labels (e.g., Table 1) are included in the document 125. More specifically, the LLM 122 can evaluate the document 125 to identify repetitive patterns, delimiters, or table-related keywords, use image analysis on the visual representation of the document 125 to detect grid structures and/or aligned data (e.g., in rows and columns), and make a determination based on the evaluation. Using this process, the LLM 112 can keep a count of the number of tables detected in the document, and provide that number in the analysis response 160.

The prompt also causes the LLM 112 to include, in the analysis response 160, response data specifying where headings and paragraphs are located. For example, the analysis response 160 generated by the LLM 112 can include labels that differentiate between header text and paragraph text, and the labels can include block identifiers (ids) corresponding to the blocks of text that have been respectively identified as headers and paragraphs. As discussed above, the locations of the blocks having the block ids is known, thereby providing an indication of where the headers and paragraphs are within the document 125.

In some implementations, the orchestrator apparatus 130 can be configured to group blocks of content together in a same semantic zone. For example, a text header (e.g., having a first block id) and one or more text paragraphs (e.g., having a first set of block ids) that are located under the header (and that are semantically related to the header) can be grouped together in a first semantic zone. In this example, the block id of the header and the set of block ids of the paragraphs can be grouped together in the same semantic group. Similarly, if images, tables, or other content elements are (i) proximate to the header and/or paragraphs in the same sematic group and (ii) conceptually related (e.g., have a minimum level of concept similarity) to the header and one or more paragraphs, the block ids of the images, tables, or other content elements can be included in the first semantic zone.

The orchestrator apparatus 130 obtains (e.g., receives) the analysis response 160 from the LLM 112. The analysis response can be formatted in a JSON format, as indicated in the example prompt above. Below is an example analysis response 160 the orchestrator apparatus 130 can obtain from the LLM 112.

```
 {"page_number":1,"run_id":"67d0712949ba0250a9843679","model":"publishers/examplepublis
 her /models/examplemodel-2.0-flash-
 001","best_processed_as":"text","language":"en","needs_ocr":false,"has_meaningful_images":tr
 ue,"has_data_table":false,"blocks_to_remove":[{"reason":"decorative
 image","block_ids_ranges":[{"start":0,"end":0}]"reason":"page
 number","block_ids_ranges":[{"start":3,"end":3}]}],"paragraph_starts":[{"block_id":1,"type":"p
 aragraph"}],"headings":[],"number_of_tables":0,"dubious_ocr":false,"complexity_level":"low","
 should_skip":false}
```

The orchestrator apparatus 130 can evaluate this analysis response 160 of the page layout analysis to dynamically determine additional processing to be performed on the document 125. For example, the orchestrator apparatus 130 can scan the response data included in the analysis response 160 and determine, based on the indication that the "has_meaningful_images":true data that image processing of the document should be performed on the document 125. This example is assuming that the document 125 a single page document. In situations, where the document 125 is a multi-page document, the determination of which (if any) additional processing is to be performed can be done on a page-by-page basis for each page of the document 125. Doing a page-by-page determination of which (if any) additional processing should be performed results in a more efficient system 100 that does not waste processing resources on processing multiple pages of the document that need not be further processed. In the event the orchestrator apparatus 130 determines that further processing for the document 125, or a page of the document 125 is not warranted based on the analysis response 160 generated during the page layout analysis, the orchestrator apparatus 130 can terminate further processing of that document 125, or page of the document 125, thereby saving computing resources.

The orchestrator apparatus 130 can evaluate other response data included in the analysis response 160 to determine whether additional processing beyond image processing should be performed. For example, the orchestrator apparatus 130 can determine whether OCR needs to be performed on the document 125 (or elements within the document 125) based on the value of "needs_ocr". For example, if the value is "true", the orchestrator apparatus 130 can determine that OCR processing of the document 125 is needed, and initiate the OCR processing. On the other hand, if the value is "false", the orchestrator apparatus 130 can determine that OCR processing of the document is not needed, and refrain from (or block) OCR processing of the document 125.

Similarly, the orchestrator apparatus 130 can determine whether table processing of the document 125 is needed. For example, the orchestrator apparatus 130 can determine whether table processing needs to be performed on the document 125 (or elements within the document 125) based on the value of "has_data_table" in the response data of the analysis response 160. For example, if the value of "has_data_table" is "true", the orchestrator apparatus 130 can determine that table processing of the document 125 is needed, and initiate the table processing. On the other hand, if the value of "has_data_table" is "false", the orchestrator apparatus 130 can determine that table processing of the document is not needed, and refrain from (or block) initiating table processing of the document 125.

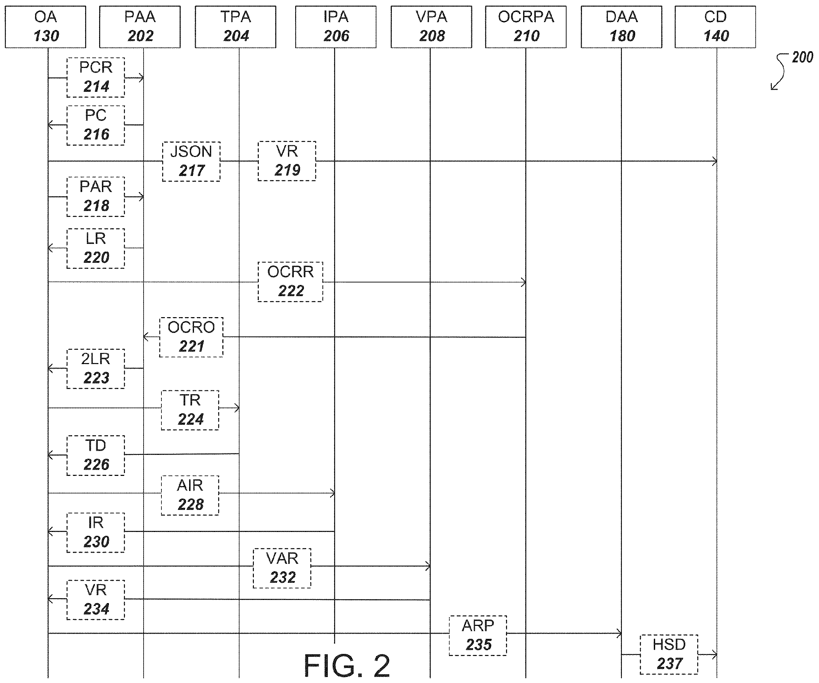

The orchestrator apparatus 130 can also be configured to initiate visual processing and/or image processing of the document 125 based on the analysis response 160 generated by the LLM 112 during the page layout analysis. The phrase "visual processing", as used herein, refers to examining the visual representation (e.g., jpeg) of the document 125 or a page of the document 125, and generating a semantic description based on the examination. Meanwhile, the phrase "image processing", as used herein, refers to independently evaluating images within the document 125 that have their own respective block ids, and generating image properties for the image based on the evaluation. In some implementations, the orchestrator apparatus 130 may initiate visual processing in most or all cases, whereas the orchestrator apparatus 130 may only initiate image processing when the value of "has_meaningful_images" in the analysis response 160 generated page layout analysis has a value of "true", or similar value indicating that the page has meaningful images. Additional details regarding the additional processing that can be initiated by the orchestrator apparatus 130 are discussed in more detail below, with respect to FIG. 2.

When the orchestrator apparatus 130 has determined that additional processing is to be performed on the document 125, and determined which additional processing is to be performed, the orchestrator apparatus 130 can continue to initiate the additional processing. In some implementations, the additional processing can be performed within the system 100. In some implementations, the additional processing can be performed, at least in part, by the external LLMs. For example, to initiate performance of multiple types of additional processing, the orchestrator apparatus 130 can generate an additional model input 150 for each different type of additional processing to be performed. For example, the orchestrator apparatus 130 can generate a separate additional model input 150 for each of OCR processing, table processing, image processing, and visual processing, and separate analysis responses 160 will be obtained for each processing performed.

The orchestrator apparatus 130 will include the content pair for the document 125 upon which the additional processing is to be performed and a respective prompt including instructions that cause the additional processing to be performed by a model, such as one of the LLMs 110. For example, when generating the additional model input 150 for table processing, the orchestrator apparatus 130 can generate a prompt to instruct a model how to perform the table processing. More specifically, additional model input 150 generated for the table processing can instruct the model to locate and extract tables within the document with column/row structure preservation. The instructions can require the model to locate each table in the document, and for each table, return a concise table title, define column names for each column, provide a list of block ids for each cell in reading order (e.g., left to right and top to bottom in the English language), and ensure consistent column count over the rows. The instructions can also specify the schema of the response data included in the analysis response 160 generated based on the table processing.

As additional processing is complete, the orchestrator apparatus 130 can aggregate the analysis responses 160 generated by the additional processing, as well as the page layout analysis previously performed to form a set of aggregated responses 170. The set of aggregated responses 170 can be a file that includes each of the analysis responses 160 (e.g., in JSON format) that were obtained from the LLMs 110 during processing of the documents 125. Alternatively, each of the analysis responses 160 can be maintained in separate files, and the collection of separate files can be considered the set of aggregated responses 170.

The orchestrator apparatus 130 provides the set of aggregated responses 170 to a structured document assembly apparatus (DAA) 180 that is configured to assemble the set of aggregated responses 170 into a hierarchical structured document ("SD") 190, such as an XML document. In constructing the hierarchical structured document, the document assembly apparatus 180 preserves the exact text content from the original document, the sematic relationships between elements (e.g., images, headers, paragraphs, etc.) of the original document 125, the logical structure of the original document 125, and a mapping between content elements and their respective positions in the original document 125.

To ensure the 190 retains the exact text of the original document 125, the document assembly apparatus 180 is configured to only include content extracted from the document 125. In other words, the document assembly apparatus 180 is prevented from generating new content for the 190, by requiring the document assembly apparatus 180 to only use only content extracted from the original document in the 190. The response data included in the analysis responses 160 is used by the document assembly apparatus 180 to provide formatting and other metadata that is attached to the original content of the document 125. In this way, the 190 that is created is ensured to not be modified by any of the LLMs 110 and/or the document assembly apparatus 180. As such, the 190 is free from hallucinations or any corrections or other modifications that might otherwise be introduced into the content of the 190.

During creation of the 190, the document assembly apparatus 180 creates a hierarchically structured representation of the document, with the document being the highest level of the hierarchy, pages being a next highest level of the hierarchy, and blocks of content being at a lower level of the hierarchy than the pages. An example structure is provided below.

```
              <document id="1">
                 <page id="2" number="1" height="792" width="612"
              has_data_tables="false" best_processed_as="text"
              meaningful_images="false" needs_ocr="false">
                     <text id="3">Example Title</text>
                     <zone id="4" role="section">
                           <text id="5">Example Overview</text>
                           <text id="6">The Example Organization receives requests
              for examples of approved projects. Several participants agreed to let
              Example Organization post excerpts of their projects online.</text>
                     </zone>
                     <zone id="7" role="section">
                           <text id="8">About</text>
                           <text id="9">We are grateful to participants for allowing us
              to publish this information. We only include information necessary to
              provide the information needed to successfully get a project approved.
              Other information is excluded.</text>
                      </zone>
                      <zone id="10" role="section">
                            <text id="11">Copyright Information</text>
                            <text id="12">The text of the projects presented is
              copyrighted. Text from these projects can only be used for nonprofit,
              educational purposes. The text cannot be changed and the correct citations
              and credits must be included in any use of the text.</text>
                      </zone>
                        </page>
                     <document>
```

As shown above, the response data included in analysis response 160 generated by the LLM 112 during the page layout analysis is included as metadata for the page (e.g., document 125 in the single page document example above). The text between each pair of <text> labels is the original text of the document 125, and is not generated or otherwise modified by a model. As shown, each element has a distinct id (e.g., id="X") are included for each element of the document, and the document assembly apparatus 180 uses zone identifiers (e.g., <zone id="4" role="section">) to semantically group related content. When the document 125 (or page of the document 125) includes images, the document assembly apparatus 180 can include the location of the image, size of the image, and any descriptions generated by visual and/or image processing performed by the LLMs 110. These descriptions are included as metadata for the image, e.g., to facilitate searching or document analysis. Similar descriptions can also be included for tables that are identified in the document 125 during processing.

Once the 190 is generated, the document assembly apparatus 180 can store the 190 in the content database 140. The 190 is now available for detailed analysis that could not be performed on the original document 125, which was flat, and lacked the structure of the 190. For example, because the 190 is stored in a structured format, the 190 can be directly searched. Furthermore, the 190 can be used to perform other types of analytical processing, which is commonplace for structured documents, but not possible for flat documents.

FIG. 2 is a swim lane diagram 200 illustrating operations performed to convert a flat (unstructured) document into a structured document. With respect to FIG. 2, it will be assumed that the document being converted is a multi-page document. The components/processing apparatus depicted by the swim lane diagram include the orchestrator apparatus 130, a page analysis apparatus 202, a table processing apparatus 204, an image processing apparatus 206, a visual processing apparatus 208, an OCR processing apparatus 210, the document assembly apparatus 180, and the content database 140. Each of the page analysis apparatus 202, table processing apparatus 204, image processing apparatus 206, visual processing apparatus 208 can be implemented in an LLM similar to the LLMs 110 discussed above with reference to FIG. 1. Each of the page analysis apparatus 202, table processing apparatus 204, image processing apparatus 206, and visual processing apparatus 208 includes a combination of hardware processing circuitry, memory devices, and instructions that cause the performance of the processes performed by each of the page analysis apparatus 202, table processing apparatus 204, image processing apparatus 206, and visual processing apparatus 208.

The processing depicted in FIG. 2 begins with the orchestrator apparatus (OA) 130 initiating a page count operation on a document 212. The page count operation can be initiated, for example, by the orchestrator apparatus 130 transmitting a page count request (PCR) 214 (e.g., as a model input) to the page analysis apparatus (PAA) 202. The page count request 214 can include the document 212 and instructions that cause the page analysis apparatus 202 to count the pages of the document 212, and return a value specifying the number of pages in the document 212. The page analysis apparatus 202 performs the page count, and transmits a page count response (PC) 216 to the orchestrator apparatus 130.

The orchestrator apparatus 130 generates a JSON (or other appropriate format) representation/version (JSON) 217 of each page of the document 212 and also generates a visual representation (VR) 219 (e.g., an image) of each page of the document 212. The orchestrator apparatus 130 can generate the JSON version 217 of each page of the document 212 in a manner similar to that previously discussed. The JSON representation 217 of the document 212 includes the raw text of the document and position data of the raw text. For example, block ids can be assigned to blocks of text (and other elements) identified in the document 212. The corresponding page numbers of the pages of the document can be included in the JSON representations. The visual representation 219 of the document 212 (e.g., a flat document) can be generated by capturing an image of the document 212 or transforming the file format of the document 212 to an image format using a file conversion tool. The orchestrator apparatus 130 saves each of the JSON representations 217 and the images 219 in the content database (CD) 140. In some implementations, the JSON representation 217 and image 219 for each page is stored in association with the page number of the document 212 represented by the JSON representation 217 and image 219. As previously discussed, the JSON representation 217 and image 219 for each page can be stored as a content pair for that page.

Once the JSON representation 217 and image 219 for each page are stored, the orchestrator apparatus 130 initiates processing of the pages of the document 212 to generate metadata for the pages. The orchestrator apparatus 130 initiates processing of each page of the document 212 separately, and in some cases in parallel. The processing initiated by the orchestrator apparatus 130 for each page is performed using the image 219 and JSON representation 217 of that page. More specifically, the orchestrator apparatus 130 can generate a model input for the processing of each page of the documents 212 that includes the image and JSON representation of that page, and instructions that cause the appropriate component (e.g., model or other apparatus) to perform the requested processing and return results of the processing in a specified format (e.g., in a JSON format).

In some implementations, the orchestrator apparatus 130 is configured to include a fallback mechanism. The fallback mechanism is a process by which the orchestrator apparatus 130 can prevent failure of the document processing. More specifically, in implementations where the orchestrator apparatus 130 is utilizing LLMs to perform the requested processing, the LLMs have a significant operation failure rate in the range of 5-10%. Moreover, when an LLM fails to complete requested processing, the processing ends, such that the requested processing will not be completed. If this occurs, the processing of the document will never complete, such that the processing spent on all of the other pages would be wasted and the system would not complete the conversion of the document 212 to a structured document, which is referred to as a conversion failure state. The fallback mechanism prevents the conversion failure state by monitoring each processing operation for completion, and taking remedial action in the event of a processing error (e.g., the processing not completing for a specified amount of time, or an error message being returned). If a processing error is determined to exist for a given page of the document 212, the orchestrator apparatus 130 can perform a processing retry for that page of the document 212. If the retry again results in an error state (one or more times), the orchestrator apparatus 130 can re-initiate the processing that resulted in the processing error using a different LLM. In some situations, the different LLM can be an LLM that is similar in processing capabilities (e.g., processing success rate or accuracy) to the LLM at which the processing error occurred. In some implementations, the different LLM can be an LLM that has higher processing capabilities (e.g., a higher success percentage or accuracy) than the LLM at which the processing error previously occurred. This process of retries and/or model escalation can continue iteratively until the processing successfully occurs, thereby preventing the situation in which the document conversion fails due to a single page processing failure.

The orchestrator apparatus 130 initiates a page layout analysis for a page of the document 212. The orchestrator apparatus 130 can initiate the page layout analysis by transmitting a page analysis request 218 (e.g., as a model input) to the page analysis apparatus 202. For example, the orchestrator apparatus 130 can create the page analysis 218 request by creating a model input package that includes the image of the document 212 and the JSON representation. The model input package can also include instructions that cause the page analysis apparatus 202 to analyze the image 219 and JSON 217 (including the raw text) of each page of the flat document and determine a page layout of each page, semantic zones of each page, and types of content elements included in each page. The orchestrator apparatus 130 can submit the page analysis request 218 to the page analysis apparatus 202. The page layout analysis can be carried out in a manner similar to that discussed in detail with reference to FIG. 1.

The orchestrator apparatus 130 obtains a layout response 220 from the page analysis apparatus 202. The layout response (LR) 220 (e.g., analysis response) specifies structural data of the page of the document 212 being processed. In some implementations, the layout response 220 can specify, for example, a page layout of the page, one, two or more semantic zones of the page, a first type of content element included in the page, and a second type of content element included in the page. For example, as discussed above with reference to FIG. 1, the layout response 220 can include response data specifying whether the page should be processed as text information for visual information (e.g., graphics). The layout response 220 can also include response data specifying the language of text on the page. The layout response 220 can also include response data specifying whether the page needs to be processed with optical character recognition (OCR), and whether the page includes meaningful images, whether the page includes tables (and how many). The layout response 220 can also include response data specifying headings that were identified on the page and corresponding metadata for the headings (e.g., block ids of the headings, which correspond to the heading locations). The layout response 220 can also include response data specifying where paragraphs (or lists) of text begin in the page, their corresponding block ids, and labels identifying the paragraphs (or lists) as such. The layout response can be in the form of a JSON format.

The orchestrator apparatus 130 uses the layout response 220 to determine additional processing to be performed for the page of the document 212. In some implementations, the orchestrator apparatus 130 can determine whether one or more of OCR processing, table processing, image processing, or visual processing of the page is required. The determination can be made, for example, based on whether the layout response 220 includes data specifying that there remains text on the page to be detected (e.g., in images and/or tables), that the page includes tables, and/or that the page includes meaningful images.

When the orchestrator apparatus 130 determines that OCR processing of the document 212 is required (e.g., because images include text information or a poor quality image of the page),the orchestrator apparatus 130 can initiate additional OCR processing. The orchestrator apparatus 130 initiates OCR processing for a page of the document 212 by transmitting an OCR request 222 (e.g., as a model input) to the OCR processing apparatus 210. For example, the orchestrator apparatus 130 can create the OCR request (OCRR) 222 by creating a model input package that includes one or both of the image 219 of the document 212 and the JSON representation 217. The model input package can also include instructions that cause the OCR processing apparatus 210 to analyze the image 219 and JSON 217 (including the raw text) of the document and generate an OCR output. The orchestrator apparatus 130 can submit the OCR request 222 to the OCR processing apparatus 210. The OCR processing can be carried out by the OCR processing apparatus 210, for example, by performing the OCR processing on the image of the page, and in some cases, using the raw text of the page to facilitate the OCR processing for greater accuracy.

In some implementations, when the OCR processing is invoked after the original page analysis request 218 has been sent to the page analysis apparatus 202, the OCR processing apparatus 210 can return an OCR output (OCRO) 221 to the page analysis apparatus 202 to again perform the page analysis, and return a second layout response (2LR) 223. The second layout response 223 can include similar information as the first layout response 220, but is generated on the newly generated OCR information in the OCR output 221.

When the orchestrator apparatus 130 determines that the page includes one or more tables (e.g., based on the layout response 220 indicating that the page includes tables), the orchestrator apparatus 130 can initiate table processing. The orchestrator apparatus 130 can initiate the table processing, for example, by generating a table request (TR) 224 that is transmitted to the table processing apparatus 204. The table request 224 can include one or more of the image of the page, the JSON representation of the page, and instructions that cause the table processing apparatus (TPA) 204 to perform the table processing. The table processing extracts the data from the tables, and preserves the column row structure of the data included in the table. Furthermore, the table processing can include generation of a description of the contents of the table (e.g., summary), and any additional context related to the table, such as the conclusion of the text content that is supported by the data in the table. The table processing results in a set of table definitions (TD) 226 that define the table, and are obtained from the table processing apparatus 204 (e.g., in an analysis response). The set of table definitions include the coordinates, dimensions, block ids of cells, and data from the tables. The set of table definitions also includes column headers, a title of the table, and other data relevant to the table.

When the orchestrator apparatus 130 determines that the page includes images (e.g., informative images), the orchestrator apparatus 130 can initiate image processing that evaluates the images and provides semantic and contextual information about the images - e.g., metadata for the images. The orchestrator apparatus 130 can initiate the image processing, for example by generating an image analysis request 228 that is transmitted to the image processing apparatus 206. The image analysis request 228 can include one or more of the image 219 of the page, the JSON representation 217 of the page, and instructions that cause the image processing apparatus 206 to perform the image processing. The image processing analyzes an image in the page, generates a description of the image (e.g., a summary of what is depicted by the image), a block id of the image, an image type of the image, and objects identified in the image. The results of the image processing can be included in an image response (IR) 230 (e.g., in an analysis response) that includes the data generated by the image processing. The image response 230 can be in a JSON format, and an example image response 230 is shown below.

```
              {"images":[{"block_id":1,"is_meaningful":true,"description":"The image
              is a cover page illustration for a financial report, featuring a person riding
              a horse on top of a cloud-like structure, holding two flags. The background
              includes architectural elements and flying
              birds.","type":"illustration","image_details":{"format":"drawing","content
              ":{"primary":"Cover page
              illustration","elements":["horse","rider","flags","cloud","architecture",bir
              ds"],"text":""},"visualProperties":{"colors":{"dominant":["orange","blue",
              "black","white"],"scheme":"Mixed"quality":"high"},"context":"Cover
              page for a financial
              report"}},{"block_id":0,"before_block_id":0,"is_meaningful":true,"descri
              ption":"The number '1' is present, likely indicating a page
              number." , "type":" graphic" , " image_details": {" content": {"primary": "Page
              number","elements":["number"],"text":"1"},"visualProperties":{"colors":{
              "dominant":["black"],"scheme":"monochrome"},"quality":"clear"}}}]}
```

The orchestrator apparatus 130 can also initiate visual processing of the page to evaluate other visual aspects of the page (e.g., background information or other visual information). For example, the visual processing can evaluate the overall visual characteristics of the page, and result in a description of the information visually conveyed by the page. The visual processing is similar to the image processing, but can be attributed at the page level of the hierarchy, whereas the image processing is generally attributed to individual images within the page. The orchestrator apparatus 130 can determine that visual processing is needed when the layout response 220 indicates that the page is best processed as a visual object rather than text. The determination of whether the page is best processed as a visual object can be made based on whether the page includes more visual elements (e.g., images, charts, diagrams, or layouts) than textual information. In some situations, a text to visual element ratio can be used to make the determination. For example, when the text to visual element ratio is lower than a specified threshold, the determination can be made that the page is best evaluated as a visual element, rather than a text element. In some situations, visual processing can be performed on every page.

The orchestrator apparatus 130 can initiate the visual processing by generating a visual analysis request 232 that is transmitted to the visual processing apparatus 208. The visual processing apparatus 208 can generate the description of the visual appearance of the page, and associate that description with the page (e.g., as metadata). The orchestrator apparatus 130 obtains a visual response 234 (e.g., an analysis response) from the visual processing apparatus 208. The visual response 234 includes the results of the visual processing. The visual response 234 can be in a JSON format.

When the processing of all pages of the document 212 is completed (e.g., when responses to all processing requests for all pages have been received), the orchestrator apparatus 130 can provide all of the responses (e.g., aggregated responses) in an aggregated response package (ARP) 235 to the document assembly apparatus 180, as discussed with reference to FIG. 1. As previously discussed, the document assembly apparatus 180 uses the original text of the document 212 and the formatting information and metadata from the responses to the processing to generate a hierarchically structured document (HSD) 237 (e.g., an XML document). The document assembly apparatus 180 stores the resulting hierarchically structured document 237 in the content database 140.

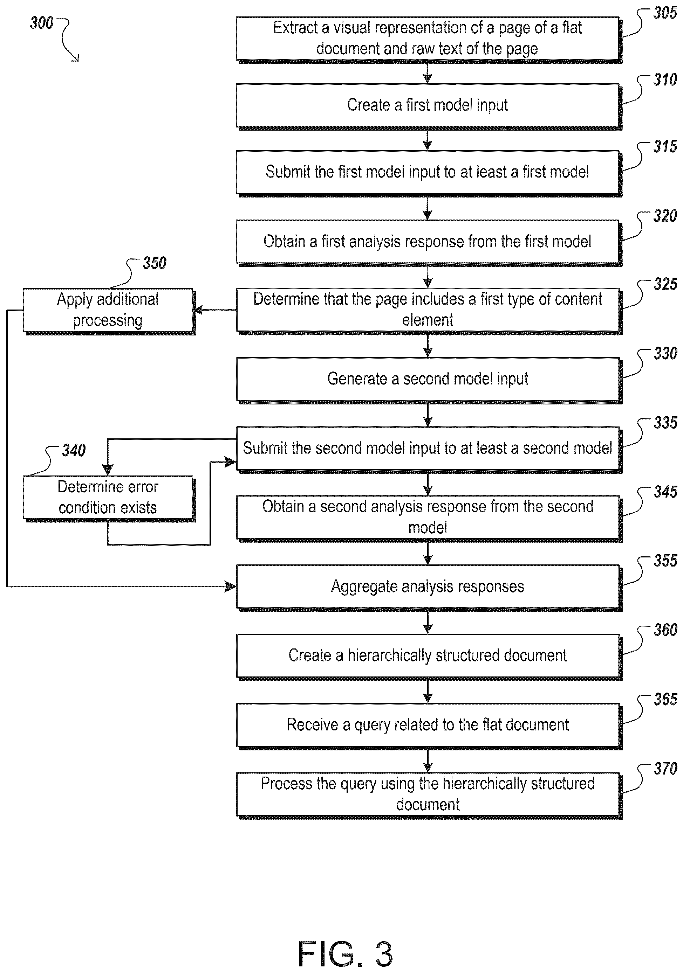

FIG. 3 is a flow chart of an example process 300 for converting an unstructured document (e.g., flat document) to a structured document (e.g., an XML document). The process 300 can be performed by one or more data processing apparatus, such as data processing apparatus included in the system 100 discussed above with reference to FIG. 1. Operations of the process 300 can also be performed by one or more data processing apparatus configured to interact with a data storage device and execute instructions that cause the one or more data processing apparatus to perform, or otherwise carry out, operations of the process 300. Operations of the process 300 can also be implemented as instructions stored on one or more computer readable medium (e.g., non-transitory computer readable medium). Execution of the instructions by one or more data processing apparatus (e.g., computing devices) cause the one or more data processing apparatus to perform operations of the process 300.

A visual representation of a page of a flat document and raw text of the page are extracted from the flat document (302). In some implementations, raw text data includes position data specifying locations of the raw text in the flat document. The raw text can be identified by parsing the flat document, such as a pdf to identify different portions of the raw text. Bounding boxes can be used to segment different portions of text from each other. For example, bounding boxes can be assigned to lines of text, or segments of text that are delineated from other segments of text by space, characters, or other features that provide structural breaks between different segment of text (e.g., different font sizes).

The position data for a portion of text can be based on the location and size of the bounding box that contains the portion of text. For example, the page coordinates of a reference point (e.g., corner) of the bounding box can be specified in the location data. The dimensions of the bounding box can also be included in the position data, and the combination of reference point coordinates and the dimensions of the bounding box can provide the area of the page that is occupied by the portion of text. For example, the position data for a portion of text can be expressed as "bb": {"x":549,"y":145,"w":5,"h":16}. In this example, the coordinates of the reference point for the bounding box "bb" is at the page coordinates X=549, y=145. These coordinates can be pixel numbers or distances according to units of another coordinate system (e.g., measured from a 0,0 reference point of the document). Continuing with this example, the dimensions of the bounding box are width = 5, and height =16, such that the bounding box extends +5 units (e.g., pixels) away from the reference point of the bounding box in the horizontal direction, and +16 units (e.g., pixels) away from the reference point in the vertical direction.

As part of the extraction process, the raw text data, including the position data, can also be formatted in a JSON format, or another appropriate format. The resulting JSON data can also include other information about the document, such as a block identifier for the block of text contained int the bounding box, a group identifier specifying a block group to which the bounding box is assigned, a type of content included in the bounding box (e.g., image, text, or vector, and the raw text that is within the bounding box. Bounding box information, including the position data, can also be included for other bounding boxes that include non-text data, such as images, thereby providing positional data for discrete elements of the page.

A first model input is created (310). In some implementations, the first model input includes information required for a model, such as an LLM, to perform layout analysis operations, and instructions that cause the model to perform the layout analysis. For example, the first model input can include the visual representation of the page, the raw text (including the position data, and a first prompt, wherein the first prompt includes instructions that cause at least a first model to analyze the visual representation and raw text of the page and determine types of content elements included in the page. The first model prompt can be created in a manner similar to that discussed above with reference to the model input 150 of FIG. 1.

The first model input is submitted to at least a first model (315). In some implementations, the first model input is submitted to the first model by transmitting the first model input to an LLM, as discussed above with reference to FIGs. 1 and 2. For example, the first model input can be similar to the model input 150 discussed with reference to the document layout analysis of FIG. 1 that is transmitted to the LLM 112, and/or the page analysis request 218 that is transmitted to the page analysis apparatus 202.

A first analysis response is obtained from the first model (320). In some implementations, the first analysis response specifies structural data of the page. The structural data can include, for example, block identifiers corresponding to locations of content in the page and data specifying (i) whether the page includes a first type of content element and (ii) whether the page includes a second type of content element. In a specific example, the first analysis response can specify whether the page includes one or more of an image or a table (e.g., a data table having rows and columns of data). The contents of the first analysis response can be similar to the response data contained in the analysis response 160 of FIG 1, which is generated by the LLM 112 with reference to the document layout analysis. The contents of the first analysis response can also be similar to the layout response 220 that is generated by the page analysis apparatus 202 of FIG. 2.

Using the first analysis response, a determination is made that the page includes a first type of content element (325). In some implementations, the determination can be made by inspecting the values of document types in the first analysis response data. For example, as previously discussed, the analysis response can include fields for indicating whether the document includes a table (and how many) and whether the document includes informational images. If the values of these fields indicates that the document includes one of these types of content (e.g., by including the value "true" or another value affirming the existence of those content types), the determination is made. If none of the fields indicates that one of these content types (e.g., non-text content elements) is included in the document, content-specific processing of the page may not be needed.

In response to the determination that the page includes the first type of content element, a second model input is created (330). In some implementations, the second model input includes at least one of the visual representation or the raw text data, and a second prompt. The second prompt can include instructions that cause performance, by at least a second model, of content-specific processing of the first type of content element. For example, if the determination is made that the page includes an image, a second model input that initiates image processing of the page can be created. In this example, the second model input can be similar to the image analysis request 228 of FIG. 2, which is performed by the image processing apparatus 206. Similarly, if the determination is made that the page includes a table, a second model input that initiates table processing of the page can be created. In this example, the second model input can be similar to the table request 224 of FIG. 2, which is performed by the table processing apparatus 208.

The second model input is submitted to at least a second model (335). In some implementations, the second model input is submitted to at least the second model by transmitting the second model input to one or more LLMs, as discussed above with reference to FIGs. 1 and 2.

A determination can be made that an error condition exists (340). In some implementations, the determination that an error condition exists can be made after submitting the second input to the second model (335) and before obtaining the second response (345). In response to determining that the error condition exists, the second input can be resubmitted to the second model or a different model. In some implementations, the determination that the error condition exists is based on not receiving a response to the model input within a specified amount of time (e.g., a timeout), or receiving an error message in response to the model input.

These operations can be part of the fallback mechanism previously discussed, and the different model can either be a model having similar capabilities as the second model, or a model having higher capabilities than the second model, as previously discussed. This prevents a single model failure from preventing transformation of the unstructured document to a structured document. In some implementations, the same model can be retried a specified number of times before escalating the submission of the second model input to a more capable or different model.

A second analysis response is obtained from the second model and any other models to which the second model input was submitted (345). In some implementations, the second model input is a model's response to the second input, and specifies attributes of the first type of content element. The attributes may have been generated by the second model based on the second model input and an analysis of one or more of the text data of the document and/or the image data. For example, as previously discussed, when the second model performs image processing of the page, the second model can generate metadata for the image, which can be included in the second analysis response. In this example, the second analysis response can be similar to the image response 230 discussed above with reference to FIG. 2. In another example, when the second model performs table processing on the page, the second model can extract the data from the table and preserve the column/row structure of the data included in the table. The second model can also generate a description of the contents of the table (e.g., summary), and any additional context related to the table, such as the text content of the page that is supported by the data in the table. The results of this processing can be included in the second analysis response, for example, as a set of table definitions 226 that define the table, and are obtained from the table processing apparatus 204 (e.g., in an analysis response) as discussed with reference to FIG. 2. In this example, the set of table definitions of the second analysis response can include the coordinates, dimensions, block ids of cells, and data from the tables. The set of table definitions also includes column headers, a title of the table, and other data relevant to the table.

In some implementations, additional processing of the page is performed (350). In some implementations, the additional processing is dynamically applied to the page. For example, when two or more different types of content elements (e.g., image and table) are determined to be included in the page based on the first analysis response, multiple types of processing can be performed on the page. For example, assuming that the first analysis response indicates that the page includes image content and table content, the second model input previously discussed can be directed to the image processing or the table processing, and the additional processing can be directed to the other processing, e.g., the table processing or the image processing to which the second model input was not directed. In a specific example, assume that the first type of content element identified in the page above is a table. In this example, a determination can similarly be made that the page also includes a second type of content, such as an image. In response to determining that the page also includes an image, the additional processing applied to the content of the page can be the image processing previously discussed. If even further types of content are determined to be included in the page based on the structure data of the first analysis response, additional types of content-specific processing can be applied to the page. In this situation, two or more different types of additional content-specific processing would be performed based on the determination that the page includes two or more different types of content (e.g., non-textual content). Note that the phrase non-textual content refers to content that has been classified as another content type (e.g., image, chart, graph, etc.), and does not imply that the content is devoid of textual content. The two or more different types of additional processing can be two or more of table detection and extraction with column and row preservation, image identification and description, optical recognition of text embedded in image, or text block grouping into semantic units. As previously discussed, conditioning the types of processing performed on the page according to the types of content identified in the page prevents wasted resources, and reduces the latency that would be imposed by performing all types of analysis on all pages.

Analysis responses are aggregated (355). In some implementations each of the first analysis response, the second analysis response, and any additional analysis responses obtained based on the application of additional processing (350) can be aggregated together to create a set of aggregated responses. Each of the responses can be maintained as received, thereby retaining all of the information obtained from the various processing that has been performed on the page. In some implementations, each of the analysis responses is in a same format (e.g., a JSON format) to facilitate easy aggregation of the analysis responses.

A hierarchically structured page is created (365). The hierarchically structured page can be created based on the first analysis response, the second analysis response, the raw text extracted from the page. A collection of hierarchically structured pages from the same document can be combined to create a full hierarchically structured version of the full document. In some implementations, each hierarchically structured page will include the raw text extracted from the page and data (e.g., metadata such as format data, position data, etc.) obtained from the first analysis response, the second analysis response, and any additional analysis responses generated by applying additional processing to the page.

The creation of the hierarchically structured page can include generating a first start tag that includes a block identifier corresponding to a portion of the raw text, inserting the portion of raw text between the first start tag and a corresponding first end tag, generating a second start tag that includes a block identifier corresponding to the first type of content element; and inserting the attributes from the second response between the second start tag and a corresponding second end tag. If additional processing was applied, additional attributes of additional content types can be inserted between corresponding tags for the additional attributes.

A query related to the flat document is received (365). In some implementations, the query can be a request to perform operations on the document, such as revise the document. In some implementations, the request will be to search contents of the document, generate analytics information using the document.

The query is processed using the hierarchically structured document (370). Because the document is in a hierarchically structured format, including metadata, the describe the contents of the document, or generate new content based on the document. Because the created document (e.g., transformed from a flat document to a hierarchically structured document including metadata) has been transformed, it is directly searchable, such that the query can be processed by searching the hierarchically structured document itself. Furthermore, the metadata added during the transformation allows for an LLM or another model to perform operations on the document that would not have been possible using the flat document that lacked the metadata and semantic structural data (e.g., how different content blocks are related both spatially and substantively) that is included in the created hierarchically structured document.

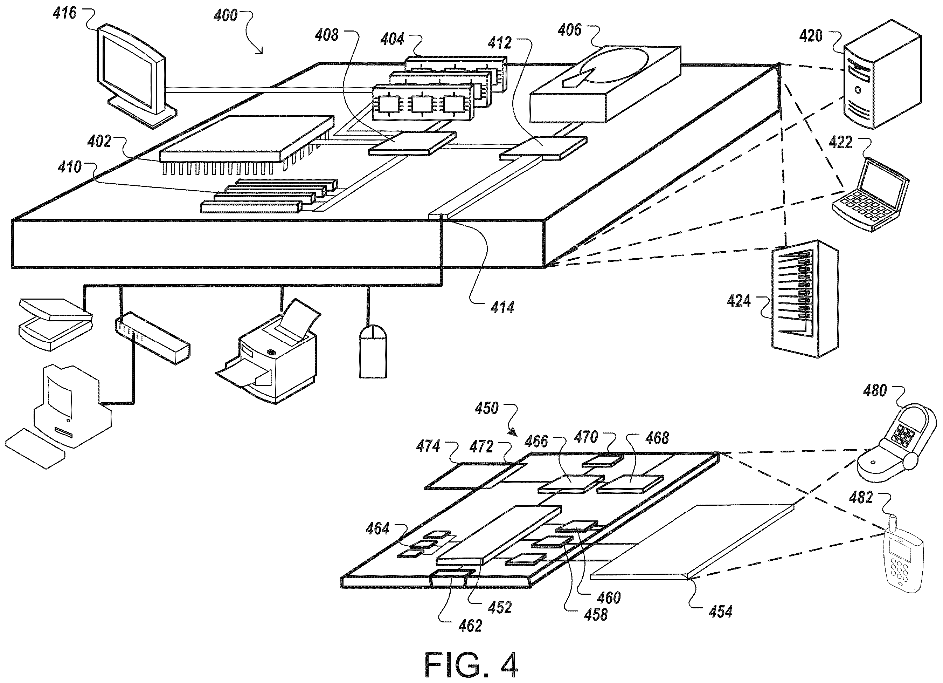

FIG. 4 shows an example of example computer device 400 and example mobile computer device 450, which can be used to implement the techniques described herein. For example, a portion or all of the operations for transforming a textual electronic document into multiple different sub-documents, identifying one or more sub-documents in response to receiving a document analysis request, and providing the identified sub-documents as input to at least one external LLM, etc. may be executed by the computer device 400 and/or the mobile computer device 450. Computing device 400 is intended to represent various forms of digital computers, including, e.g., laptops, desktops, workstations, personal digital assistants, servers, blade servers, mainframes, and other appropriate computers. Computing device 450 is intended to represent various forms of mobile devices, including, e.g., personal digital assistants, tablet computing devices, cellular telephones, smartphones, and other similar computing devices. The components shown here, their connections and relationships, and their functions, are meant to be examples only, and are not meant to limit implementations of the techniques described and/or claimed in this document.

Computing device 400 includes processor 402, memory 404, storage device 406, high-speed interface 408 connecting to memory 404 and high-speed expansion ports 410, and low-speed interface 412 connecting to low-speed bus 414 and storage device 406. Each of components 402, 404, 406, 408, 410, and 412, are interconnected using various busses, and can be mounted on a common motherboard or in other manners as appropriate. Processor 402 can process instructions for execution within computing device 400, including instructions stored in memory 404 or on storage device 406 to display graphical data for a GUI on an external input/output device, including, e.g., display 416 coupled to high-speed interface 408. In other implementations, multiple processors and/or multiple busses can be used, as appropriate, along with multiple memories and types of memory. Also, multiple computing devices 400 can be connected, with each device providing portions of the necessary operations (e.g., as a server bank, a group of blade servers, or a multi-processor system).

Memory 404 stores data within computing device 400. In one implementation, memory 404 is a volatile memory unit or units. In another implementation, memory 404 is a non-volatile memory unit or units. Memory 404 also can be another form of computer-readable medium (e.g., a magnetic or optical disk. Memory 404 may be non-transitory.)

Storage device 406 is capable of providing mass storage for computing device 400. In one implementation, storage device 406 can be or contain a computer-readable medium (e.g., a floppy disk device, a hard disk device, an optical disk device, or a tape device, a flash memory or other similar solid state memory device, or an array of devices, such as devices in a storage area network or other configurations.) A computer program product can be tangibly embodied in a data carrier. The computer program product also can contain instructions that, when executed, perform one or more methods (e.g., those described above.) The data carrier is a computer- or machine-readable medium, (e.g., memory 404, storage device 406, memory on processor 402, and the like.)

High-speed controller 408 manages bandwidth-intensive operations for computing device 400, while low-speed controller 412 manages lower bandwidth-intensive operations. Such allocation of functions is an example only. In one implementation, high-speed controller 408 is coupled to memory 404, display 416 (e.g., through a graphics processor or accelerator), and to high-speed expansion ports 410, which can accept various expansion cards (not shown). In the implementation, low-speed controller 412 is coupled to storage device 406 and low-speed expansion port 414. The low-speed expansion port, which can include various communication ports (e.g., USB, Bluetooth^{®}, Ethernet, wireless Ethernet), can be coupled to one or more input/output devices, (e.g., a keyboard, a pointing device, a scanner, or a networking device including a switch or router, e.g., through a network adapter.)

Computing device 400 can be implemented in a number of different forms, as shown in the figure. For example, it can be implemented as standard server 420, or multiple times in a group of such servers. It also can be implemented as part of rack server system 424. In addition, or as an alternative, it can be implemented in a personal computer (e.g., laptop computer 422.) In some examples, components from computing device 400 can be combined with other components in a mobile device (not shown), e.g., device 450. Each of such devices can contain one or more of computing device 400, 450, and an entire system can be made up of multiple computing devices 400, 450 communicating with each other.

Computing device 450 includes processor 452, memory 464, an input/output device (e.g., display 454, communication interface 466, and transceiver 468) among other components. Device 450 also can be provided with a storage device, (e.g., a microdrive or other device) to provide additional storage. Each of components 450, 452, 464, 454, 466, and 468, are interconnected using various buses, and several of the components can be mounted on a common motherboard or in other manners as appropriate.

Processor 452 can execute instructions within computing device 450, including instructions stored in memory 464. The processor can be implemented as a chipset of chips that include separate and multiple analog and digital processors. The processor can provide, for example, for coordination of the other components of device 450, e.g., control of user interfaces, applications run by device 450, and wireless communication by device 450.

Processor 452 can communicate with a user through control interface 458 and display interface 456 coupled to display 454. Display 454 can be, for example, a TFT LCD (Thin-Film-Transistor Liquid Crystal Display) or an OLED (Organic Light Emitting Diode) display, or other appropriate display technology. Display interface 456 can comprise appropriate circuitry for driving display 454 to present graphical and other data to a user. Control interface 458 can receive commands from a user and convert them for submission to processor 452. In addition, external interface 462 can communicate with processor 442, so as to enable near area communication of device 450 with other devices. External interface 462 can provide, for example, for wired communication in some implementations, or for wireless communication in other implementations, and multiple interfaces also can be used.

Memory 464 stores data within computing device 450. Memory 464 can be implemented as one or more of a computer-readable medium or media, a volatile memory unit or units, or a non-volatile memory unit or units. Expansion memory 474 also can be provided and connected to device 450 through expansion interface 472, which can include, for example, a SIMM (Single In Line Memory Module) card interface. Such expansion memory 474 can provide extra storage space for device 450, or also can store applications or other data for device 450. Specifically, expansion memory 474 can include instructions to carry out or supplement the processes described above, and can include secure data also. Thus, for example, expansion memory 474 can be provided as a security module for device 450, and can be programmed with instructions that permit secure use of device 450. In addition, secure applications can be provided through the SIMM cards, along with additional data, (e.g., placing identifying data on the SIMM card in a non-hackable manner.)

The memory 464 can include, for example, flash memory and/or NVRAM memory, as discussed below. In one implementation, a computer program product is tangibly embodied in a data carrier. The computer program product contains instructions that, when executed, perform one or more methods, e.g., those described above. The data carrier is a computer- or machine-readable medium (e.g., memory 464, expansion memory 474, and/or memory on processor 452), which can be received, for example, over transceiver 468 or external interface 462.

Device 450 can communicate wirelessly through communication interface 466, which can include digital signal processing circuitry where necessary. Communication interface 466 can provide for communications under various modes or protocols (e.g., GSM voice calls, SMS, EMS, or MMS messaging, CDMA, TDMA, PDC, WCDMA, CDMA2000, or GPRS, among others.) Such communication can occur, for example, through radio-frequency transceiver 468. In addition, short-range communication can occur, e.g., using a Bluetooth^{®}, WiFi, or other such transceiver (not shown). In addition, GPS (Global Positioning System) receiver module 470 can provide additional navigation- and location-related wireless data to device 450, which can be used as appropriate by applications running on device 450. Sensors and modules such as cameras, microphones, compasses, accelerators (for orientation sensing), etc. may be included in the device.

Device 450 also can communicate audibly using audio codec 460, which can receive spoken data from a user and convert it to usable digital data. Audio codec 460 can likewise generate audible sound for a user, (e.g., through a speaker in a handset of device 450.) Such sound can include sound from voice telephone calls, can include recorded sound (e.g., voice messages, music files, and the like) and also can include sound generated by applications operating on device 450.

Computing device 450 can be implemented in a number of different forms, as shown in the figure. For example, it can be implemented as cellular telephone 480. It also can be implemented as part of smartphone 482, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor. The programmable processor can be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to a computer program product, apparatus and/or device (e.g., magnetic discs, optical disks, memory, Programmable Logic Devices (PLDs)) used to provide machine instructions and/or data to a programmable processor, including a machine-readable medium that receives machine instructions.

To provide for interaction with a user, the systems and techniques described here can be implemented on a computer having a device for displaying data to the user (e.g., a CRT (cathode ray tube) or LCD (liquid crystal display) monitor), and a keyboard and a pointing device (e.g., a mouse or a trackball) by which the user can provide input to the computer. Other kinds of devices can be used to provide for interaction with a user as well; for example, feedback provided to the user can be a form of sensory feedback (e.g., visual feedback, auditory feedback, or tactile feedback); and input from the user can be received in a form, including acoustic, speech, or tactile input.

The systems and techniques described here can be implemented in a computing system that includes a backend component (e.g., as a data server), or that includes a middleware component (e.g., an application server), or that includes a frontend component (e.g., a client computer having a user interface or a Web browser through which a user can interact with an implementation of the systems and techniques described here), or a combination of such back end, middleware, or frontend components. The components of the system can be interconnected by a form or medium of digital data communication (e.g., a communication network). Examples of communication networks include a local area network (LAN), a wide area network (WAN), and the Internet.

The computing system can include clients and servers. A client and server are generally remote from each other and typically interact through a communication network. The relationship of client and server arises by virtue of computer programs running on the respective computers and having a client-server relationship to each other.

**In** some implementations, the engines described herein can be separated, combined, or incorporated into a single or combined engine. The engines depicted in the figures are not intended to limit the systems described here to the software architectures shown in the figures.

A number of embodiments have been described. Nevertheless, it will be understood that various modifications can be made without departing from the spirit and scope of the processes and techniques described herein. In addition, the logic flows depicted in the figures do not require the particular order shown, or sequential order, to achieve desirable results. In addition, other steps can be provided, or steps can be eliminated, from the described flows, and other components can be added to, or removed from, the described systems. Accordingly, other embodiments are within the scope of the following claims.

### Examples

Although the present application is defined in the attached claims, it should be understood that the present invention can also (additionally or alternatively) be defined in accordance with the following examples:
Example 1. A computer-implemented method, comprising:
   extracting, by a system including circuity, a visual representation of a page of a flat document, raw text data from the flat document, wherein the raw text data includes position data of raw text included in the flat document;
   creating, by the system, a first model input including the visual representation of the page, the raw text, and a first prompt, wherein the first prompt includes instructions that cause at least a first model to analyze the visual representation and raw text of the page and determine types of content elements included in the page;
   submitting, by the system, the first model input to at least the first model;
   obtaining, by the system, a first analysis response to the first model input specifying structural data of the page, wherein the structural data includes block identifiers corresponding to locations of content in the page and data specifying (i) whether the page includes a first type of content element and (ii) whether the page includes a second type of content element;
   determining, based on the first analysis response, that the page includes the first type of content element;
   in response to the determination that the page includes the first type of content element:
      generating, by the system, a second model input including at least one of the visual representation or the raw text data, and a second prompt including instructions that cause performance, by at least a second model, of content-specific processing of the first type of content element;
      submitting, by the system, the second input to at least the second model;
      obtaining, by the system, a second analysis response to the second input specifying attributes of the first type of content element generated by at least the second model based on the second model input; and
      creating, by the system, a hierarchically structured page based on the first response, the second response, the raw text extracted from the page, and the first type of content element included in the page, wherein creating the hierarchically structured page includes:
         generating a first start tag that includes a block identifier corresponding to a portion of the raw text;
         inserting the portion of raw text between the first start tag and a corresponding first end tag;
         generating a second start tag that includes a block identifier corresponding to the first type of content element; and
         inserting the attributes from the second response between the second start tag and a corresponding second end tag.
Example 2. The method of Example 1, further comprising:
   combining multiple hierarchically structured pages of the flat document into a hierarchically structured document;
   receiving, by the system, a query related to the flat document; and
   processing, by the system, the query using the hierarchically structured document.
Example 3. The method of Example 1, further comprising dynamically applying additional processing to content of the page based on the first analysis response.
Example 4. The method of Example 3, wherein:
   the second type of content element is an image; and
   dynamically applying additional processing to the content of the page based on the first response comprises applying image processing to the image based on the structure data indicating that the page includes the image.
Example 5. The method of Example 3, wherein dynamically applying additional processing to the content of the page based on the first response comprises:
   determining, by the system, that the page includes two or more different types of content based on the first response; and
   applying, by the system, two or more different types of content-specific processing to content of the page based on the determination that the page includes the two or more different types of content.
Example 6. The method of Example 5, wherein applying the two or more different types of content-specific processing to the content of the page comprises applying two or more of table detection and extraction with column and row preservation, image identification and description, or optical recognition of text embedded in image.
Example 7. The method of Example 1, further comprising:
   determining, after submitting the second input to the second model and before obtaining the second response, that an error condition exists; and
   resubmitting the second input to the second model or a different model in response to determining that the error condition exists.
Example 8. A system connected between a client device and one or more large language models (LLMs), comprising:
   one or more memory devices; and
   one or more data processing apparatus, including circuitry, configured to interact with the one or more memory devices and execute instructions that, upon execution, cause the one or more data processing apparatus to perform operations comprising:
      extracting a visual representation of a page of a flat document, raw text data from the flat document, wherein the raw text data includes position data of raw text included in the flat document;
      creating a first model input including the visual representation of the page, the raw text, and a first prompt, wherein the first prompt includes instructions that cause at least a first model to analyze the visual representation and raw text of the page and determine types of content elements included in the page;
      submitting the first model input to at least the first model;
      obtaining a first analysis response to the first model input specifying structural data of the page, wherein the structural data includes block identifiers corresponding to locations of content in the page and data specifying (i) whether the page includes a first type of content element and (ii) whether the page includes a second type of content element;
      determining, based on the first analysis response, that the page includes the first type of content element;
      in response to the determination that the page includes the first type of content element:
         generating a second model input including at least one of the visual representation or the raw text data, and a second prompt including instructions that cause performance, by at least a second model, of content-specific processing of the first type of content element;
         submitting the second input to at least the second model;
         obtaining a second analysis response to the second input specifying attributes of the first type of content element generated by at least the second model based on the second model input; and
         creating a hierarchically structured page based on the first response, the second response, the raw text extracted from the page, and the first type of content element included in the page, wherein creating the hierarchically structured page includes:
            generating a first start tag that includes a block identifier corresponding to a portion of the raw text;
            inserting the portion of raw text between the first start tag and a corresponding first end tag;
            generating a second start tag that includes a block identifier corresponding to the first type of content element; and
            inserting the attributes from the second response between the second start tag and a corresponding second end tag.
Example 9. The system of Example 8, wherein the instructions cause the one or more data processing apparatus to perform operations further comprising:
   combining multiple hierarchically structured pages of the flat document into a hierarchically structured document;
   receiving a query related to the flat document; and
   processing the query using the hierarchically structured document.
Example 10. The system of Example 8, further comprising dynamically applying additional processing to content of the page based on the first analysis response.
Example 11. The system of Example 10, wherein:
   the second type of content element is an image; and
   dynamically applying additional processing to the content of the page based on the first response comprises applying image processing to the image based on the structure data indicating that the page includes the image.
Example 12. The system of Example 10, wherein dynamically applying additional processing to the content of the page based on the first response comprises:
   determining, by the system, that the page includes two or more different types of content based on the first response; and
   applying, by the system, two or more different types of content-specific processing to content of the page based on the determination that the page includes the two or more different types of content.
Example 13. The system of Example 12, wherein applying the two or more different types of content-specific processing to the content of the page comprises applying two or more of table detection and extraction with column and row preservation, image identification and description, or optical recognition of text embedded in image.
Example 14. The system of Example 8, wherein the instructions cause the one or more data processing apparatus to perform operations further comprising:
   determining, after submitting the second input to the second model and before obtaining the second response, that an error condition exists; and
   resubmitting the second input to the second model or a different model in response to determining that the error condition exists.
Example 15. One or more non-transitory computer readable medium storing instructions that, upon execution by one or more data processing apparatus of a system that is connected between a client device and one or more generative models, cause the one or more data processing apparatus to perform operations comprising:
   extracting a visual representation of a page of a flat document, raw text data from the flat document, wherein the raw text data includes position data of raw text included in the flat document;
   creating a first model input including the visual representation of the page, the raw text, and a first prompt, wherein the first prompt includes instructions that cause at least a first model to analyze the visual representation and raw text of the page and determine types of content elements included in the page;
   submitting the first model input to at least the first model;
   obtaining a first analysis response to the first model input specifying structural data of the page, wherein the structural data includes block identifiers corresponding to locations of content in the page and data specifying (i) whether the page includes a first type of content element and (ii) whether the page includes a second type of content element;
   determining, based on the first analysis response, that the page includes the first type of content element;
   in response to the determination that the page includes the first type of content element:
      generating a second model input including at least one of the visual representation or the raw text data, and a second prompt including instructions that cause performance, by at least a second model, of content-specific processing of the first type of content element;
      submitting the second input to at least the second model;
      obtaining a second analysis response to the second input specifying attributes of the first type of content element generated by at least the second model based on the second model input; and
      creating a hierarchically structured page based on the first response, the second response, the raw text extracted from the page, and the first type of content element included in the page, wherein creating the hierarchically structured page includes:
         generating a first start tag that includes a block identifier corresponding to a portion of the raw text;
         inserting the portion of raw text between the first start tag and a corresponding first end tag;
         generating a second start tag that includes a block identifier corresponding to the first type of content element; and
         inserting the attributes from the second response between the second start tag and a corresponding second end tag.
Example 16. The one or more non-transitory computer readable medium of Example 15, wherein the instructions cause the one or more data processing apparatus to perform operations further comprising:
   combining multiple hierarchically structured pages of the flat document into a hierarchically structured document;
   receiving a query related to the flat document; and
   processing the query using the hierarchically structured document.
Example 17. The one or more non-transitory computer readable medium of Example 15, further comprising dynamically applying additional processing to content of the page based on the first analysis response.
Example 18. The one or more non-transitory computer readable medium of Example 17, wherein:
   the second type of content element is an image; and
   dynamically applying additional processing to the content of the page based on the first response comprises applying image processing to the image based on the structure data indicating that the page includes the image.
Example 19. The one or more non-transitory computer readable medium of Example 17, wherein dynamically applying additional processing to the content of the page based on the first response comprises:
   determining, by the system, that the page includes two or more different types of content based on the first response; and
   applying, by the system, two or more different types of content-specific processing to content of the page based on the determination that the page includes the two or more different types of content.
Example 20. The one or more non-transitory computer readable medium of Example 19, wherein applying the two or more different types of content-specific processing to the content of the page comprises applying two or more of table detection and extraction with column and row preservation, image identification and description, or optical recognition of text embedded in image.
Example 21. The one or more non-transitory computer readable medium of Example 15, wherein the instructions cause the one or more data processing apparatus to perform operations further comprising:
   determining, after submitting the second input to the second model and before obtaining the second response, that an error condition exists; and
   resubmitting the second input to the second model or a different model in response to determining that the error condition exists.

## Claims

1. A computer-implemented method, comprising:
extracting, by a system including circuity, a visual representation of a page of a flat document, raw text data from the flat document, wherein the raw text data includes position data of raw text included in the flat document;
creating, by the system, a first model input including the visual representation of the page, the raw text, and a first prompt, wherein the first prompt includes instructions that cause at least a first model to analyze the visual representation and raw text of the page and determine types of content elements included in the page;
submitting, by the system, the first model input to at least the first model;
obtaining, by the system, a first analysis response to the first model input specifying structural data of the page, wherein the structural data includes block identifiers corresponding to locations of content in the page and data specifying (i) whether the page includes a first type of content element and (ii) whether the page includes a second type of content element;
determining, based on the first analysis response, that the page includes the first type of content element;
in response to the determination that the page includes the first type of content element:
generating, by the system, a second model input including at least one of the visual representation or the raw text data, and a second prompt including instructions that cause performance, by at least a second model, of content-specific processing of the first type of content element;
submitting, by the system, the second model input to at least the second model;
obtaining, by the system, a second analysis response to the second model input specifying attributes of the first type of content element generated by at least the second model based on the second model input; and
creating, by the system, a hierarchically structured page based on the first analysis response, the second analysis response, the raw text extracted from the page, and the first type of content element included in the page, wherein creating the hierarchically structured page includes:
generating a first start tag that includes a block identifier corresponding to a portion of the raw text;
inserting the portion of raw text between the first start tag and a corresponding first end tag;
generating a second start tag that includes a block identifier corresponding to the first type of content element; and
inserting the attributes from the second analysis response between the second start tag and a corresponding second end tag.

2. The method of claim 1, further comprising:
combining multiple hierarchically structured pages of the flat document into a hierarchically structured document;
receiving, by the system, a query related to the flat document; and
processing, by the system, the query using the hierarchically structured document.

3. The method of claim 1 or claim 2, further comprising dynamically applying additional processing to content of the page based on the first analysis response.

4. The method of claim 3, wherein:
the second type of content element is an image; and
dynamically applying additional processing to the content of the page based on the first analysis response comprises applying image processing to the image based on the structure data indicating that the page includes the image.

5. The method of claim 3, wherein dynamically applying additional processing to the content of the page based on the first analysis response comprises:
determining, by the system, that the page includes two or more different types of content elements based on the first analysis response; and
applying, by the system, two or more different types of content-specific processing to content of the page based on the determination that the page includes the two or more different types of content elements.

6. The method of claim 5, wherein applying the two or more different types of content-specific processing to the content of the page comprises applying two or more of table detection and extraction with column and row preservation, image identification and description, or optical recognition of text embedded in image.

7. The method of any one of the preceding claims, further comprising:
determining, after submitting the second model input to the second model and before obtaining the second analysis response, that an error condition exists; and
resubmitting the second model input to the second model or a different model in response to determining that the error condition exists.

8. A system connected between a client device and one or more large language models (LLMs), comprising:
one or more memory devices; and
one or more data processing apparatus, including circuitry, configured to interact with the one or more memory devices and execute instructions that, upon execution, cause the one or more data processing apparatus to perform operations according to any one of the methods of claims 1 to 7.

9. One or more non-transitory computer readable medium storing instructions that, upon execution by one or more data processing apparatus of a system that is connected between a client device and one or more generative models, cause the one or more data processing apparatus to perform operations according to any one of the methods of claims 1 to 7.
